# EUROPEAN PATENT SPECIFICATION

(11) **EP 1 956 129 B1**
(45) Date of publication and mention of the grant of the patent: **17.08.2016**
(21) Application number: 06832508.3
(22) Date of filing: 10.11.2006
(51) Int. Cl.: D04B 35/00, G06F 17/50

(54) **KNIT DESIGN DEVICE AND KNIT DESIGN METHOD AND ITS PROGRAM**
VORRICHTUNG ZUM ENTWURF EINER MASCHENWARE SOWIE VERFAHREN ZUM ENTWURF EINER MASCHENWARE UND ENTSPRECHENDES COMPUTERPROGRAMM
DISPOSITIF ET PROCEDE DE CREATION DE TRICOT ET PROGRAMME CORRESPONDANT

(30) Priority: 17.11.2005 JP 2005332966
(43) Date of publication of application: 13.08.2008
(73) Proprietor: Shima Seiki Manufacturing., Ltd., Wakayama-shi, Wakayama 6410003 (JP)
(72) Inventor: MAEIWA, Tetsuji, Wakayama-shi Wakayama 641-0003 (JP); TAKENAKA, Kazuko, Wakayama-shi Wakayama 641-0003 (JP)
(74) Representative: Emde, Eric
(86) International application number: PCT/JP2006/322462
(87) International publication number: WO 2007/058123

(56) References cited:
- WO-A1-03/032204
- JP-A- 07 185 159
- JP-A- 63 120 145
- JP-B2- 2 656 405
- JP-B2- 2 678 228
- JP-B2- 3 325 168
- JP-B2- 07 113 978
- US-B1- 6 611 730

## Description

### TECHNICAL FIELD

The present invention relates to a knit design device, a knit design method and a knit design program for use in designing a knit such as a knitted fabric and a garment knitted by a flat knitting machine or other knitting machine.

### BACKGROUND ART

When designing a knitted fabric or a garment, the design data of a knit is displayed on a monitor of a computer, and a user inputs or changes the design data. Next, a structural pattern is sometimes used as the design of the knit, and the design data of the structural pattern is stored as a library or the like in a design device so that the user calls up the design of the structural pattern from the library to make an alteration thereto.

Here, Patent Literature 1 proposes to provide a window for inputting parameters of a structural pattern for the purpose of making an alteration to the design of the structural pattern. However, since the parameters are input in of numerical values, the user cannot perform designing intuitively, and thus a process of trial and error is essential.

Patent Literature 1: WO2003/032204

Prior art document JP 2 656 405 B2 discloses a knit design system comprising an engineering work station which forms an image of the fabric showing the state of a completed knit surface on the basis of inputted information and showing said image on a color display as well as converts said information into sequence data representing the order of processes of knitting the fabric and also into control data showing control operation of the knitting machine.

### DISCLOSURE OF THE INVENTION

An object of the present invention is to enable the user to intuitively alter the design of the structural pattern without performing numeric entry.

An additional object of the present invention is to further simplify the process of making alteration to the design of the structural pattern.

These and other objects are solved by a knit design device having the features as set forth in claim 1. Preferred embodiments of the knit design device are stated in the subclaims 2.

In a device for designing a knit to be knitted by a knitting machine, and having a monitor for displaying design data of the knit and input means used by a user, the present invention is characterized in that the device has means for storing a design of a structural pattern along with a mark, means for displaying the design of the structural pattern on the monitor, along with the mark placed on the structural pattern or in the vicinity thereof, and design changing means for changing the design of the structural pattern in response to when the user moves the mark on the monitor using a pointing device, to thereby display the changed design on the monitor.

Preferably, the mark has a positional mark of the structural pattern and an individual pattern mark for one individual pattern corresponding to a plurality of individual patterns of the structural pattern, and the design changing means moves the position of the structural pattern by moving the positional mark thereof and changes designs of the plurality of individual patterns of the structural pattern by moving the individual pattern mark.

More preferably, the mark further has a size mark of the structural pattern, and the design changing means changes the size of the structural pattern by moving the size mark and repeats the individual patterns so as to fill in the changed size. Furthermore, preferably, the structural pattern has at least a gathering pattern (yosegara) and a crossed pattern, and the design changing means moves the individual pattern mark of the gathering pattern to thereby change width or pitch of gathering parts according to the member of gathering parts, and further moves a mark on one end in a horizontal direction of the crossed pattern to thereby change a design of the other end in the horizontal direction of the crossed pattern so as to obtain a symmetry.

Preferably, when a plurality of structural patterns are displayed on the monitor, the mark of only a structural pattern selected by the user is displayed on the monitor.

Preferably, the device further has means for storing a knitting program of the structural pattern and a parameter of the knitting program to display the mark so as to represent the parameter, wherein the design changing means changes the parameter in response to when the user moves the mark, and determines the design of the structural pattern by means of the changed parameter and the knitting program.

The mentioned objects are also solved by a knit design method as stated in claim 3 as well as by a knit design program defined in claim 4.

In the method for designing a knit to be knitted by a knitting machine by displaying data of a design of the knit on a monitor and altering the design according to user input, the method has the steps of storing the design of a structural pattern along with a mark, displaying the design of the structural pattern on the monitor, along with the mark placed on the structural pattern or in the vicinity thereof, changing the design of the structural pattern in response to when the user moves the mark on the monitor using a pointing device, to thereby display the changed design on the monitor.

In the program for a knit design device for designing a knit to be knitted by a knitting machine, and having a monitor for displaying design data of the knit and input means used by a user, the present invention is characterized in that the program has a command for storing a design of a structural pattern along with a mark, a command for displaying the design of the structural pattern on the monitor, along with the mark placed on the structural pattern or in the vicinity thereof, and a design changing command for changing the design of the structural pattern in response to when the user moves the mark on the monitor using a pointing device, to thereby display the changed design on the monitor.

In the present invention, a design of a structural pattern is displayed on a monitor along with a mark. When a user moves the mark using a pointing device such as stylus or a mouse, the design of the structural pattern is changed accordingly. Therefore, the structural pattern can be intuitively designed by moving the mark.

The structural pattern is generally constituted by a repetition of a plurality of individual patterns. Then, a positional mark of the structural pattern and an individual pattern mark for one individual pattern are provided. The entire structural pattern is moved by moving the positional mark, and designs of the plurality of individual patterns within the structural pattern are changed by moving the individual pattern mark. In this manner, the entire structural pattern can be moved and the plurality of individual patterns can be edited at once.

Preferably, a size mark of the structural pattern is provided to change the size of the structural pattern by moving the size mark and to repeat the individual pattern so as to fill in the changed size. Consequently, the size of the structural pattern can be changed easily by moving the size mark, and accordingly the individual patterns can be changed.

It is preferred that the structural pattern be provided with a gathering pattern and a crossed pattern. For the gathering pattern, the width or pitch of gathering parts is changed according to the number of gathering parts by moving the individual pattern mark, whereby the gathering pattern can be edited easily. The crossed pattern is generally symmetrical, and thus moving one end of a mark in a horizontal direction changes the design of the other end of the crossed pattern in the horizontal direction in a symmetric manner. The crossed pattern can be edited easily in this manner.

Generally a plurality of structural patterns are used in a knit. Displaying marks on all of the structural patterns is troublesome and reduces operability. Therefore, by displaying a mark only for a structural pattern selected by the user, the structural pattern can be edited easily as other excess marks become out of sight.

In the present invention, a design of a structural pattern is displayed on a monitor along with a mark. When a user moves the mark using a pointing device such as stylus or a mouse, the design of the structural pattern is changed accordingly. Therefore, the structural pattern can be intuitively designed by moving the mark.

The structural pattern is generally constituted by a repetition of a plurality of individual patterns. Then, a positional mark of the structural pattern and an individual r pattern mark for one individual pattern are provided. The entire structural pattern is moved by moving the positional mark, and designs of the plurality of individual patterns within the structural pattern are changed by moving the individual pattern mark. In this manner, the entire structural pattern can be moved and the plurality of individual patterns can be edited at once.

Preferably, a size mark of the structural pattern is provided to change the size of the structural pattern by moving the size mark and to repeat the individual pattern so as to fill in the changed size. Consequently, the size of the structural pattern can be changed easily by moving the size mark, and accordingly the individual patterns can be changed.

It is preferred that the structural pattern be provided with a gathering pattern and a crossed pattern. For the gathering pattern, the width or pitch of gathering parts is changed according to the number of gathering parts by moving the individual pattern mark, whereby the gathering pattern can be edited easily. The crossed pattern is generally symmetrical, and thus moving one end of a mark in a horizontal direction changes the design of the other end of the crossed pattern in the horizontal direction in a symmetric manner. The crossed pattern can be edited easily in this manner.

In order to realize editing of a structural pattern by means of a mark, for example, the knitting program itself of the structural pattern and a parameter of the knitting program are separated and then stored separately. Then, a mark corresponding to this parameter is displayed, the parameter is changed by moving the mark, and the changed parameter is applied to the knitting program to determine the design of the structural pattern. Accordingly, the design of the structural pattern can be edited easily by moving the mark.

### BRIEF DESCRIPTION OF THE DRAWINGS

Fig. 1 is a block diagram of a knit design device of an embodiment;
Fig. 2 is a diagram showing a flow of data in each module in the embodiment;
Fig. 3 is a flowchart of a mark operation interpreting section of a knit design method of the embodiment;
Fig. 4 is a flowchart of an interpreted part of the mark operation performed in the knit design method of the embodiment;
Fig. 5 is a block diagram of a knit design program of the embodiment;
Fig. 6 is a diagram showing design data of a crossed pattern module of the embodiment with color codes (displayed in grayscale herein) and marks;
Fig. 7 is a diagram showing that the design data of Fig. 6 is displayed in the form of loops;
Fig. 8 is a diagram showing the structures of the module and marks of the design data shown in Fig. 6;
Fig. 9 is a diagram showing design data of a links pattern module of the embodiment with color codes (displayed in grayscale herein) and marks;
Fig. 10 is a diagram showing that the design data of Fig. 9 is displayed in the form of loops;
Fig. 11 is a diagram showing design data of a gathering pattern module of the embodiment with color codes (displayed in grayscale herein) and marks;
Fig. 12 is a diagram showing the design data of Fig. 11 in the form of loops;
Fig. 13 is a diagram showing design data of a front-and-back crossed pattern module of the embodiment with color codes (displayed in grayscale herein) and marks; and
Fig. 14 is a diagram showing the design data of Fig. 13 in the form of loops.

### BEST MODE FOR CARRYING OUT THE INVENTION

The best embodiment for carrying out the present invention will be described hereinafter.

### Embodiment

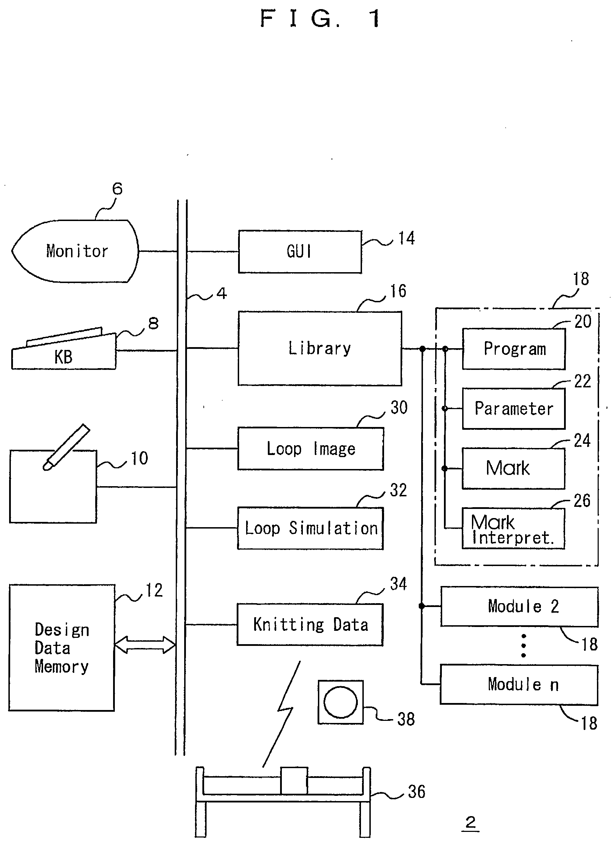

The embodiment is shown in Fig. 1 through Fig. 14. In each of the drawings, reference numeral 2 is a knit design device, which is realized using an appropriate computer, and reference numeral 4 is a bus, and reference numeral 6 a monitor such as a color monitor. Reference numeral 8 is a keyboard, and reference numeral 10 a stylus, which is an example of a pointing device, but a mouse, a trackball or a joystick may be used instead. Design data of a knit that is input by a user using the keyboard 8 or stylus 10 is stored in a design data memory 12.

A graphic user interface (GUI) 14 provides a user interface on the monitor 6 and receives user input provided through the stylus 10. Particularly, the graphic user interface 14 receives a drawing of the design of a knit and an operation performed by the stylus 10 on a mark for inputting a structural pattern. Furthermore, since a plurality of structural patterns are normally used in a single knitted article, when each user selects one structural pattern using the stylus 10 a mark for editing the design of this structural pattern only is displayed. When another structural pattern is selected, the mark of the original structural pattern is deleted, and the mark for the newly selected structural pattern is displayed.

A library 16 stores a plurality of design module units 18 for respective types of structural patterns. The module units 18 are each provided with a module knitting program storage unit 20 to store a module knitting program and stores, in a module parameter storage unit 22, a parameter value to be assigned to the knitting program. Specifically, the design of a structural pattern is defined by assigning a parameter to the module knitting program. A mark generation program 24 is a program for generating a mark (mark) for inputting a module parameter from the stylus 10 via the monitor 6, and the shape of the mark represents an existing parameter value. When the user moves the mark using the stylus 10, the graphic user interface 14 detects that effect and delivers it to a mark operation interpreting section 26. The mark operation interpreting section 26 interprets the mark operation performed by the user and accordingly generates a new parameter.

A loop diagram generator 30 converts design data of a structural pattern generated by the module unit 18 so as to be displayed in the form of loops, and displays it on the monitor 6. A loop simulation 32 generates a simulation image of the knit using the design data stored in the memory 12, and particularly generates a simulation image that realistically displays individual loops. A data converter 34 converts the design data stored in the memory 12 to data for a knit that can be actually knitted by a flat knitting machine 36 or the like. The design data stored in the memory 12 is stored as design data corresponding to a virtual standard knitting machine that is set without considering the type of each knitting machine. In the data converter 34, the type of the flat knitting machine 36 that actually knits the knit is input, and [the design data stored in the memory 12] is converted to knitting data corresponding to [the type of the flat knitting machine 36]. The knitting data is input to the flat knitting machine 36 via a communication line, a removable disk 38, or the like.

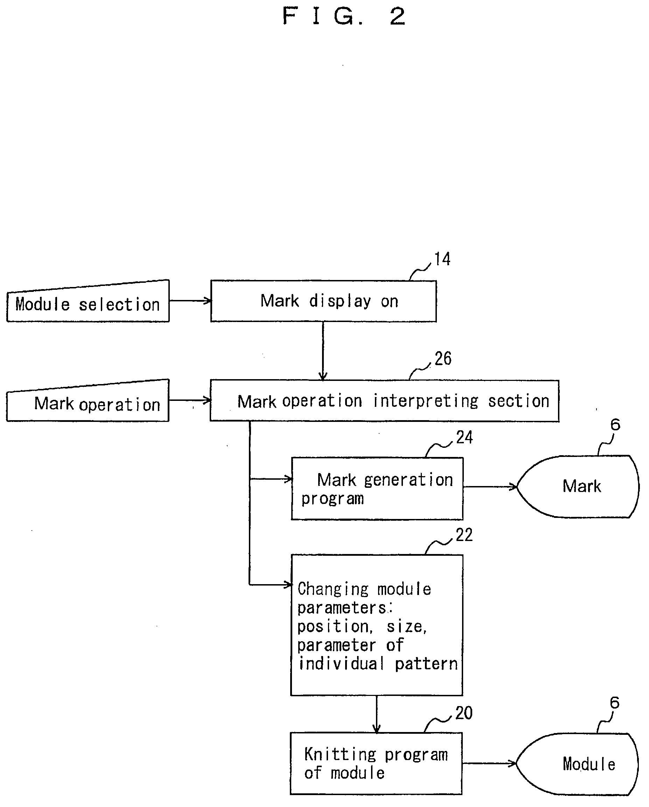

Fig. 2 shows a flow of data related to editing of a structural pattern, wherein a structural pattern (module) is selected by specifying one of the plurality of structural patterns on the monitor 6 by means of the stylus 10, and the marks for the corresponding structural pattern are displayed by the graphic user interface 14. When the user operates the marks, this operation is interpreted by the mark operation interpreting section 26, and thereby the parameters are changed. Then, new marks are generated by the mark generation program 24 on the basis of the changed new parameters and displayed on the monitor 6. Furthermore, stored values of the parameters of the parameter storage unit 22 are changed. Note that the parameters include the position and size of the module and parameters of individual patterns. Moreover, for a simple structural pattern such as half cardigan pattern, only the marks for the position and size exist, and sometimes the marks for the individual patterns do not exist. On the other hand, for a complex structural pattern such as a crossed pattern (cable pattern), the marks for the plurality of individual patterns exist in a single structural pattern. The new parameters are assigned to the module knitting program storage unit 20 to edit the design data of the structural pattern, and the design data of the module is displayed on the monitor 6.

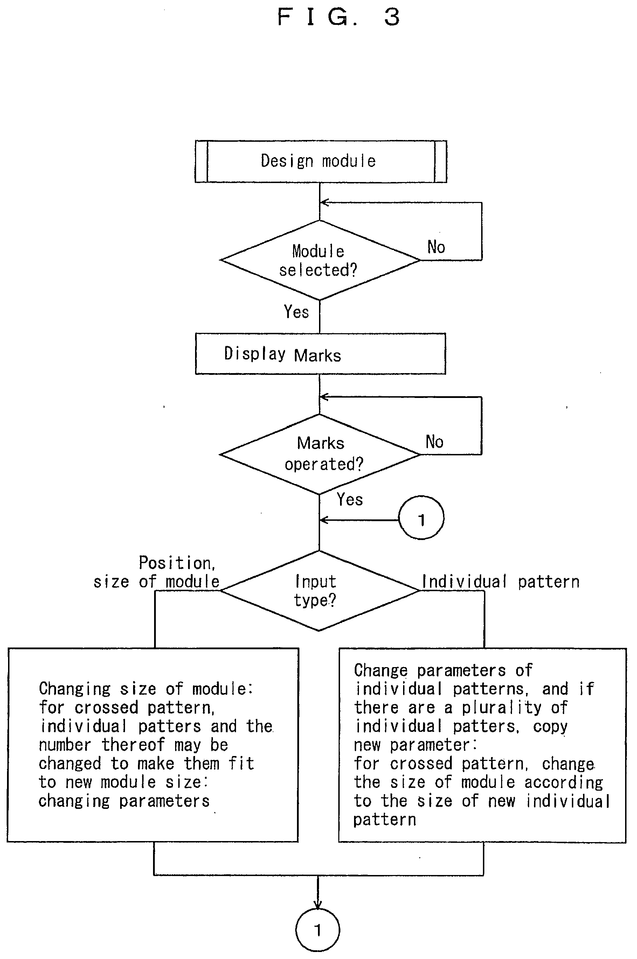

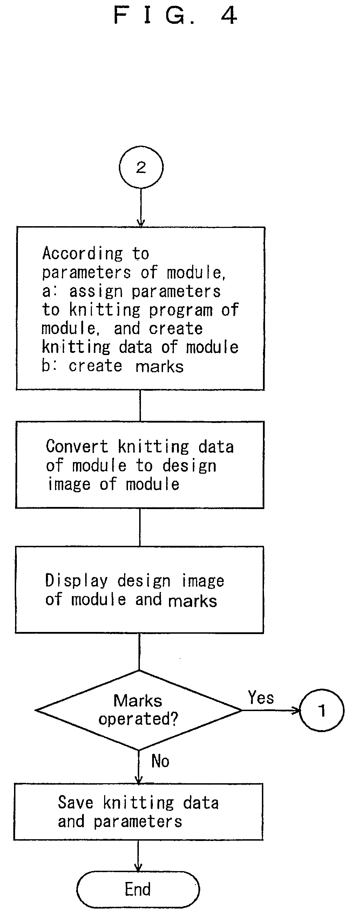

Fig. 3 and Fig. 4 explain design processes of a module, wherein the user selects a module using the stylus, and marks (marks) corresponding to the selected module are displayed. The marks include marks related to the position and size of the module and marks related to the individual patterns. When the position of the module is changed the module is moved to a new position entirely, and when the size of the module is changed the size or the number of individual patterns is changed so as to fill in the inside of the module by repeating the individual patterns. Note that in the case of the crossed pattern, the number of individual patterns is sometimes changed so as to be fitted with the new module size. When the module size and the number of individual patterns cannot be freely changed independently, the data of the individual patterns are changed so as to be able to perform knitting once the module size is changed, and then the module size is also changed accordingly once the data of the individual patterns are changed.

When the parameters of the individual patterns are changed, the data of each individual pattern is changed based on the new parameters when the plurality of individual patterns exist within the module. Moreover, in the case of the crossed pattern, the module size is changed in accordance with the size of each new individual pattern. The changed module parameters are assigned to the knitting program to create new knitting data. The marks are also changed in response to the change of the parameters. Then, the knitting data of the module is converted to a design image and displayed along with the marks. Upon completion of the mark operation, the obtained knitting data and parameters of the module are saved.

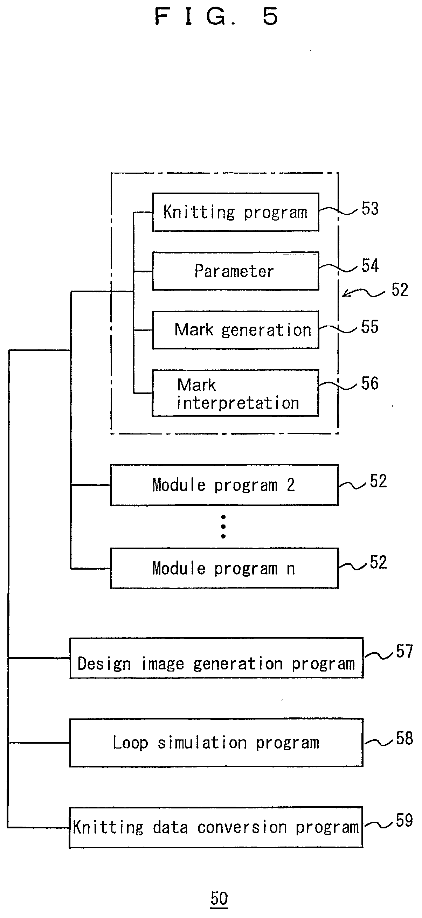

Fig. 5 shows a knit design program 50 of the present embodiment, wherein reference numeral 52 is a module program that is generally provided in plurality, reference numeral 53 a knitting program of a module, reference numeral 54 a model parameter storage command to be assigned to the knitting program 53, reference numeral 55 a mark generation program, and reference numeral 56 a mark interpretation program. The contents and functions of the programs 53 through 56 are the same as those described with reference to Fig. 2 through Fig. 4. A design image generation program 57 generates a design image of a structural pattern (module), a loop simulation program 58 performs loop simulation, and a conversion program 59 converts the design data into specific knitting data [for use in the flat knitting machine]. The knit design device 2 shown in Fig. 1 can be obtained by installing the program 50 in an appropriate computer.

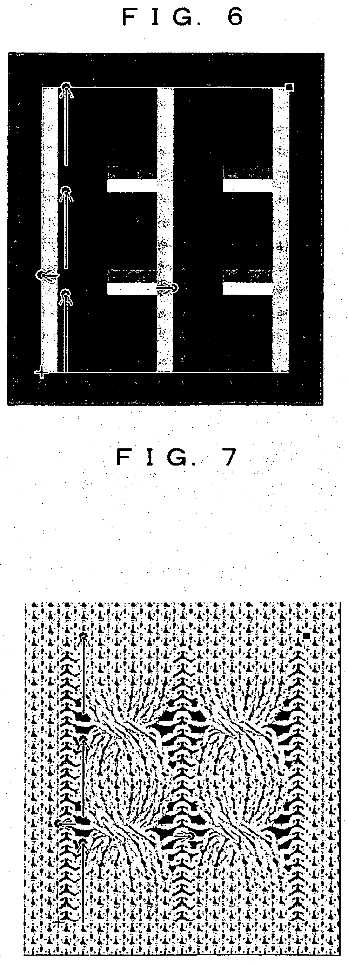

Fig. 6 through Fig. 14 each show an example of a module and marks or marks thereof. Fig. 6 through Fig. 8 each show a module 80 of the crossed pattern, Fig. 6 displaying the design data with color codes (in grayscale here), and Fig. 7 displaying the design data in the form of a loop diagram. Also, in the present embodiment two display modes of color code display and loop diagram display are performed simultaneously by the monitor 6, and the marks are also displayed. A mark 81 indicates the position of the module 80, and a mark 82 indicates the size of the module 80. In the module 80, two upper and lower crossed patterns are arranged in two rows, right and left, where the area between the lower crossed pattern and a lower end of the model constitutes an area 93, the area between the upper and lower crossed patterns constitutes an area 94, and the area between the upper crossed pattern and an upper end of the module constitutes an area 95. A mark 83 is for operating the height of the area 93, a mark 84 for operating the height of the area 94, and a mark 85 for operating the height of the area 95. The operations of the marks 83 through 85 enable scaling of the three individual patterns of the areas 93 through 95 individually in the vertical direction. In Fig. 6 and Fig. 7, there are two rows of crossed patterns on the right and left, where the marks 83 through 85 are provided only on the left crossed pattern, and the results of the operations performed with the marks 83 through 85 of the left crossed pattern are directly applied to the right crossed pattern. A mark 86 operates the width of a back stitch area 90 located on the left end of the module 80, and a mark 87 operates a back stitch area 92 located in the vertical direction at the central part of the module 80. Note that a back stitch area 91 on the right end of the module 80 is operated symmetrically with respect to the back stitch area 90 by the mark 86.

In the module 80, the back stitch areas 90, 91 are the individual patterns of the same design, and the back stitch area 92 additionally exists. Moreover, the symmetrical areas 93, 94, 95 exist in a pair, and the marks 83 through 85 are provided only on the right or left of these areas respectively. The results of the operations [performed with the marks 83 though 85] are similarly applied to the other right or left individual pattern. Note that in the case of three or more upper and left crossed patterns, the middle area 94 exists in plurality in the vertical direction, one mark 84 is displayed for these areas 94 and operated to similarly scale the plurality of areas 94 that are connected vertically. When the crossed patterns are provided in three or more rows in the horizontal direction, a plurality of the back stitch areas 92 are arranged parallel, and the mark 87 is displayed for one of the back stitch areas 92 and operated to similarly scale the plurality of back stitch areas in the horizontal direction.

When the mark 82 is moved to change the size of the module 80, the size of the module 80 is changed without changing, for example, the widths of the back stitch areas 90 through 92 or the sizes of the areas 93 through 95. When scaling in the vertical direction, the number of areas 94 is changed. Also, when scaling in the horizontal direction, the unit composed of one row of areas 93 through 95 and the back stitch area 92 is added or deleted. When a margin or a shortage is generated in the upper part of the module 80 when the number of areas 94 is changed so that the crossed patterns do not stop in the middle of the module 80, or when a margin or a shortage is generated by adding or deleting the unit composed of one row of areas 93 through 95 and the back stitch area 92, the sizes of the areas 93 through 95 or the widths of the back stitch areas 90 through 92 are adjusted so as to prevent the occurrence of a margin or a shortage. Alternatively, the marks 83 through 87 may be operated to cope with the occurrence of a margin or a shortage.

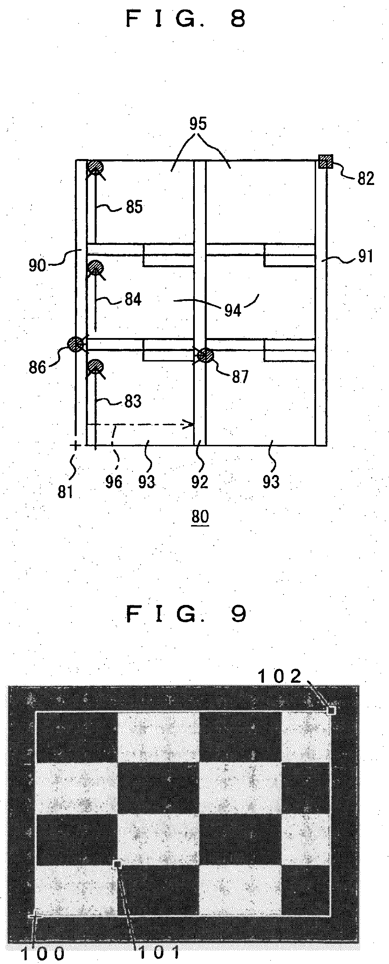

The back stitch areas 90 through 92 and the areas 93 through 95 may be changed according to the design rules so that knitting can be performed by a flat knitting machine that is different from the one described above. For example, the mark 82 is moved up and down, and the changed portion of the size of the module 80 is allocated to the three areas 93 through 95 as evenly as possible. Furthermore, the mark 82 is moved left and right, and the changed portion of the width of the module 80 is allocated evenly to the right and left areas 93, 95, but when it becomes difficult to knit the crossed pattern due to narrowed width, right or left one row of crossed pattern is changed and the back stitch area 92 in the middle is erased. Conversely, when the mark 82 is moved to the right of the drawing to increase the width of the module 80, the widths of the areas 93 through 95 on the right and left are enlarged symmetrically. Although the present embodiment shows 3 stitches x 3 stitches of crossed patterns, a mark 96 shown in Fig. 8 may be provided to change the areas 93 through 95 to have 2 stitches x 2 stitches or 4 stitches x 4 stitches of crossed patterns.

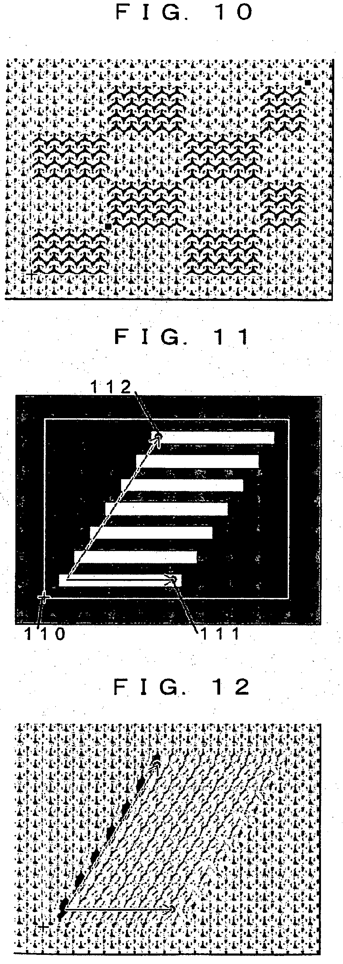

Fig. 9 and Fig. 10 each show structural patterns of links patterns and marks 100 through 102, Fig. 9 showing them in grayscale and Fig. 10 showing in the form of a loop diagram. The mark 100 is a mark for moving the entire links patterns, and the mark 101 is a mark for determining the size of an individual pattern. When moving the mark 101 left and right the width of a links pattern unit is changed, and when moving the mark 101 up and down the height of the links pattern unit is changed. The changed individual pattern is repeated to fill in the module. When moving the mark 102, the sizes of the links patterns are entirely changed without changing the sizes of the individual patterns, and the width or height of the individual patterns of the right end row or upper column is changed, or the number of individual patterns is changed.

Fig. 11 and Fig. 12 show the design data of a gathering pattern in gray scale (Fig. 11) and in the form of a loop diagram display (Fig. 12). A mark 110 determines the position of the gathering pattern, and a mark 111 determines the number of gathering stitches (width). There are seven gathering stages in the drawings, but the number of gathering stitches in the seven stages is changed by the same number by moving the mark 111. A mark 112 determines the number of gathering pitches (inclination) and the gathering parts. When the mark 112 is moved left or right the gathering pitch is changed, and as a result when the knitting becomes complicated, that effect is alerted on the monitor 6, and pitches of a direction at which knitting can be performed in a range proximate to the position of the new mark 112 are input. When the mark 112 is slid obliquely, the gathering stages change. Accordingly, the sizes of the entire gathering patterns are determined by the marks 111, 112, hence a size determination mark is not provided.

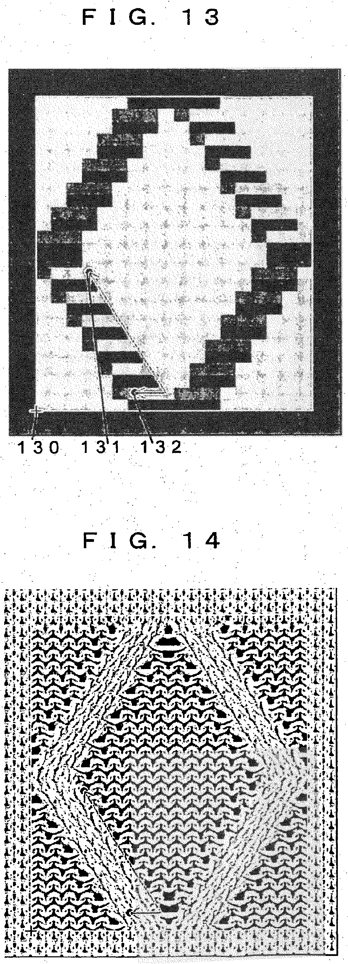

Fig. 13 and Fig. 14 each show a front-and-back crossed pattern, Fig. 13 displaying the front-and-back crossed pattern in grayscale, and Fig. 14 displaying the front-and-back crossed pattern in the form of a loop diagram. A mark 130 defines the position of the structural pattern, a mark 131 defines the pitch and number of gathering parts, and a mark 132 defines the number gathering stitches. In this structural pattern, a pattern using a gathering part is displayed symmetrically in vertical and horizontal directions in a diamond shape at four sections, and thus movements of the marks 131, 132 are applied symmetrically in the vertical and horizontal directions.

Although the present embodiment has illustrated two display modes of color code display (in grayscale) and loop diagram display, they may be displayed simultaneously on the monitor 6, or only one of them may be displayed, and the present embodiment enables editing of the design of a structural pattern using either color code display or loop diagram display.

Although the present embodiment has illustrated the marks, buttons for changing the parameters may be displayed as the marks. Moreover, the color of an editable section may be inverted and displayed to obtain a mark, and thereby this mark may be dragged using the pointing device to change the parameters.

**EXPLANATION OF REFERENCE NUMERALS**

| | |
|---|---|
| 2 Knit design device | 4 Bus |
| 6 Monitor | 8 Keyboard |
| 10 Stylus | 12 Design data memory |
| 14 Graphic user interface (GUI) | |
| 16 Library | 18 Module unit |
| 20 Module knitting program storage unit | |
| 22 Module parameter storage unit | |
| 24 Mark generation program | |
| 26 Mark operation interpreting section | |
| 30 Loop diagram generator | |
| 32 Loop simulation | |
| 34 Data converter | |
| 36 Flat knitting machine | |
| 38 Removable disk | |
| 50 Knit design program | |
| 52 Module program | |
| 53 Knitting program of module | |
| 54 Module parameter storage command | |
| 55 Mark generation program | |
| 56 Mark interpretation program | |
| 57 Design image generation program | |
| 58 Loop simulation program | |
| 59 Conversion program for converting to knitting data | |
| 80 Module of crossed pattern | |
| 81 through 87 Mark (mark) | |
| 90 through 92 Back stitch area | |
| 93 through 95 Area | |
| 100 through 102 Mark | |
| 110 through 112 Mark | |
| 130 through 132 Mark | |

## Claims

1. A knit design device for designing a knit to be knitted by a knitting machine, and comprising a monitor (6) for displaying design data of the knit and input means (10) used by a user,
the knit design device comprising:
design storage means (20, 22) for storing a design of a structural pattern along with a mark (81 through 87, 96, 100 through 102, 111, 112, 130 through 132)
means for storing a knitting program of the structural pattern and a parameter of the knitting program to display the mark so as to represent the parameter in response to when the user moves the mark,
means for displaying the marks on the structural pattern or in the vicinity thereof on the monitor, along with the design of the structural pattern; and
design changing means (26) for, when a user moves the marks on the monitor by using the input means (10), changing the design of the structural pattern, to display the changed design on the monitor,
and the marks comprising at least positional marks (81, 100, 110, 130) for the structural pattern and individual pattern marks (83 through 86, 96, 101, 111, 112, 131, 132) corresponding to a plurality of individual patterns of the structural pattern, and
the design changing means (26) moves a position of the structural pattern by moving the positional marks (81, 100, 11 0, 130) and changes designs of the plurality of individual patterns of the structural pattern by moving the individual pattern marks (83 through 86, 96,101,111,112,131,132),
wherein the structural pattern comprising at least a gathering pattern and a crossed pattern, and wherein the design changing means (26) moves the individual pattern marks (111, 112) of the gathering pattern to thereby change width or pitch of gathering parts according to the number of gathering parts, and further moves an individual pattern mark (83 through 86, 131, 132), on one end in a horizontal direction of the crossed pattern to thereby change a design of the other end in the horizontal direction of the crossed pattern so as to obtain a symmetry, and wherein
the marks further comprising size marks (82, 102) for the structural pattern, and the design changing means changes a size of the structural pattern by moving the size marks (82, 102), and repeats the individual patterns so as to fill in the changed size.

2. The knit design device according to claim 1, being **characterized in that** when a plurality of the structural patterns are displayed on the monitor, the marks corresponding only to a structural pattern selected by the user are displayed on the monitor.

3. A knit design method for designing a knit to be knitted by a knitting machine by displaying design data of the knit on a monitor and changing the design according to user input, the knit design method comprising the steps of:
storing a design of a structural pattern along with a mark (81 through 87, 96, 100 through 102, 111, 112, 130 through 132) by means of design storage means (20, 22);
means for storing a knitting program of the structural pattern and a parameter of the knitting program to display the mark so as to represent the parameter in response to when the user moves the mark;
displaying the marks on the structural pattern or in the vicinity thereof on the monitor, along with the design of the structural pattern; and
when a user moves the marks on the monitor by using a pointing device, changing the design of the structural pattern by means of design changing means (26), to display the changed design on the monitor,
the marks comprising at least positional marks (81, 100, 110, 130) for the structural pattern and individual pattern marks (83 through 86, 96, 101, 111, 112, 131, 132) corresponding to a plurality of individual patterns of the structural pattern, and
the design changing means (26) moving a position of the structural pattern by moving the positional marks (81, 100; 110, 130) and changing designs of the plurality of individual patterns of the structural pattern by moving the individual pattern marks (83 through 86, 96,101,111,112,131,132),
wherein the structural pattern comprising at least a gathering pattern and a crossed pattern, and the design changing means (26) moves the individual pattern marks (111, 112) of the gathering pattern to thereby change width or pitch of gathering parts according to the number of gathering parts, and further moves an individual pattern mark (83 through 86, 131, 132) on one end in a horizontal direction of the crossed pattern to thereby change a design of the other end in the horizontal direction of the crossed pattern so as to obtain a symmetry, and wherein
the marks further comprising size marks (82, 102) for the structural pattern, and the design changing means changes a size of the structural pattern by moving the size marks (82, 102), and repeats the individual patterns so as to fill in the changed size.

4. A knit design program for a knit design device (2) for designing a knit to be knitted by a knitting machine and comprising a monitor for displaying design data of the knit and input means, the knit design program comprising:
a command (53,54) for storing a design of a structural pattern with a mark (81 through 87, 96, 100 through 102, 111, 112, 130 through 132); means for storing a knitting program of the structural pattern and a parameter of the knitting program to display the mark so as to represent the parameter in response to when the user moves the mark
a command for displaying the marks on the structural pattern or in the vicinity thereof on the monitor, along with the design of the structural pattern; and a design changing command (56) for, when a user moves the marks on the monitor by using a pointing device, and changing the design of the structural pattern, to display the changed design on the monitor,
the marks comprising at least positional marks (81, 100, 11 0, 130) for the structural pattern and individual pattern marks (83 through 86, 96, 101, 111, 112, 131, 132) corresponding to a plurality of individual patterns of the structural pattern, and
the design changing command (56) moving a position of the structural pattern by moving the positional marks (81, 100, 110, 130) and changing designs of the plurality of individual patterns of the structural pattern by moving the individual pattern marks (83 through 86, 96,101,111,112,131,132),
wherein the structural pattern comprising at least a gathering pattern and a crossed pattern, and the design changing means (26) moves the individual pattern marks (111, 112) of the gathering pattern to thereby change width or pitch of gathering parts according to the number of gathering parts, and further moves an individual pattern mark, (83 through 86, 131, 132), on one end in a horizontal direction of the crossed pattern to thereby change a design of the other end in the horizontal direction of the crossed pattern so as to obtain a symmetry, and wherein
the marks further comprising size marks (82, 102) for the structural pattern, and the design changing means changes a size of the structural pattern by moving the size marks (82, 102), and repeats the individual patterns so as to fill in the changed size.

## Patentansprüche

1. Strickentwurfsvorrichtung zum Entwerfen eines durch eine Strickmaschine zu strickenden Gestricks, die einen Monitor (6) zum Anzeigen von Entwurfsdaten des Gestricks und eine durch einen Benutzer verwendete Eingabeeinrichtung (10) umfasst,
wobei die Strickentwurfsvorrichtung weiterhin umfasst:
eine Entwurfsspeichereinrichtung (20, 22) zum Speichern eines Entwurfs eines Strukturmusters zusammen mit einer Markierung (81 bis 87, 96, 100 bis 102, 111, 112, 130 bis 132),
eine Einrichtung zum Speichern eines Strickprogramms des Strukturmusters und eines Parameters des Strickprogramms für das Anzeigen der Markierung, um den Parameter in Reaktion auf eine Bewegung der Markierung durch den Benutzer wiederzugeben,
eine Einrichtung zum Anzeigen der Markierungen an dem Strukturmuster oder in Nachbarschaft zu diesem auf dem Monitor zusammen mit dem Entwurf des Strukturmusters, und
eine Entwurfsänderungseinrichtung (26) zum, wenn ein Benutzer die Markierungen auf dem Monitor unter Verwendung der Eingabeeinrichtung (10) bewegt, Ändern des Entwurfs des Strukturmusters, um den geänderten Entwurf auf dem Monitor anzuzeigen,
wobei die Markierungen wenigstens Positionsmarkierungen (81, 100, 110, 130) für das Strukturmuster und Einzelmustermarkierungen (83 bis 86, 96, 101, 111, 112, 131, 132) in Entsprechung zu einer Vielzahl von einzelnen Mustern des Strukturmusters umfassen, und
die Entwurfsänderungseinrichtung (26) die Position des Strukturmusters durch das Bewegen der Positionsmarkierungen (81, 100, 110, 130) bewegt und Entwürfe der Vielzahl von einzelnen Mustern des Strukturmusters durch das Bewegen der Einzelmustermarkierungen (83 bis 86, 96, 101, 111, 112, 131, 132) ändert,
wobei das Strukturmuster wenigstens ein Sammel- bzw. Raffmuster und ein gekreuztes Muster umfasst, und wobei die Entwurfsänderungseinrichtung (26) die Einzelmustermarkierungen (111, 112) des Raffmusters bewegt, um dadurch die Breite oder den Abstand von Sammel- bzw. Raffteilen in Übereinstimmung mit der Anzahl von Raffteilen zu ändern, und weiterhin eine Einzelmustermarkierung (83 bis 86, 131, 132) an einem Ende in einer horizontalen Richtung des gekreuzten Musters bewegt, um einen Entwurf des anderen Endes in der horizontalen Richtung des gekreuzten Musters zu ändern, um dadurch eine Symmetrie zu erhalten, und
wobei die Markierungen weiterhin Größenmarkierungen (82, 102) für das Strukturmuster umfassen und die Entwurfsänderungseinrichtung die Größe des Strukturmusters durch das Bewegen der Größenmarkierungen (82, 102) ändert und die einzelnen Muster wiederholt, um die geänderte Größe zu füllen.

2. Strickentwurfsvorrichtung nach Anspruch 1, **dadurch gekennzeichnet, dass**, wenn eine Vielzahl der Strukturmuster auf dem Monitor angezeigt werden, nur die Markierungen in Entsprechung zu einem durch den Benutzer ausgewählten Strukturmuster auf dem Monitor angezeigt werden.

3. Strickentwurfsverfahren zum Entwerfen eines durch eine Strickmaschine zu strickenden Gestricks durch das Anzeigen von Entwurfsdaten des Gestricks auf einem Monitor und das Ändern des Entwurfs gemäß einer Benutzereingabe, wobei das Strickentwurfsverfahren die folgenden Schritte umfasst:
Speichern eines Entwurfs eines Strukturmusters zusammen mit einer Markierung (81 bis 87, 96, 100 bis 102, 111, 112, 130 bis 132) mittels einer Entwurfsspeichereinrichtung (20, 22),
Speichern eines Strickprogramms des Strukturmusters und eines Parameters des Strickprogramms für das Anzeigen der Markierung, um den Parameter in Reaktion auf eine Bewegung der Markierung durch den Benutzer wiederzugeben,
Anzeigen der Markierungen an dem Strukturmuster oder in Nachbarschaft zu diesem auf dem Monitor zusammen mit dem Entwurf des Strukturmusters, und
wenn ein Benutzer die Markierungen auf dem Monitor unter Verwendung einer Zeigeeinrichtung bewegt, Ändern des Entwurfs des Strukturmusters mittels einer Entwurfsänderungseinrichtung (26), um den geänderten Entwurf auf dem Monitor anzuzeigen,
wobei die Markierungen wenigstens Positionsmarkierungen (81, 100, 110, 130) für das Strukturmuster und Einzelmustermarkierungen (83 bis 86, 96, 101, 111, 112, 131, 132) in Entsprechung zu einer Vielzahl von einzelnen Mustern des Strukturmusters umfassen, und
die Entwurfsänderungseinrichtung (26) die Position des Strukturmusters durch das Bewegen der Positionsmarkierungen (81, 100, 110, 130) bewegt und Entwürfe der Vielzahl von einzelnen Mustern des Strukturmusters durch das Bewegen der Einzelmustermarkierungen (83 bis 86, 96, 101, 111, 112, 131, 132) ändert,
wobei das Strukturmuster wenigstens ein Sammel- bzw. Raffmuster und ein gekreuztes Muster umfasst und wobei die Entwurfsänderungseinrichtung (26) die Einzelmustermarkierungen (111, 112) des Raffmusters bewegt, um dadurch die Breite oder den Abstand von Sammel- bzw. Raffteilen in Übereinstimmung mit der Anzahl von Raffteilen zu ändern, und weiterhin eine Einzelmustermarkierung (83 bis 86, 131, 132) an einem Ende in einer horizontalen Richtung des gekreuzten Musters bewegt, um einen Entwurf des anderen Endes in der horizontalen Richtung des gekreuzten Musters zu ändern, um dadurch eine Symmetrie zu erhalten, und
wobei die Markierungen weiterhin Größenmarkierungen (82, 102) für das Strukturmuster umfassen, und die Entwurfsänderungseinrichtung die Größe des Strukturmusters durch das Bewegen der Größenmarkierungen (82, 102) ändert und die einzelnen Muster wiederholt, um die geänderte Größe zu füllen.

4. Strickmusterprogramm für eine Strickentwurfsvorrichtung (2) zum Entwerfen eines durch eine Strickmaschine zu strickenden Gestricks, die einen Monitor zum Anzeigen von Entwurfsdaten des Gestricks und eine Eingabeeinrichtung umfasst, wobei das Strickentwurfsprogramm umfasst:
einen Befehl (53, 54) zum Speichern eines Entwurfs eines Strukturmusters zusammen mit einer Markierung (81 bis 87, 96, 100 bis 102, 111, 112, 130 bis 132),
Einrichtungen zum Speichern eines Strickprogramms des Strukturmusters und eines Parameters des Strickprogramms für das Anzeigen der Markierung, um den Parameter in Reaktion auf eine Bewegung der Markierung durch einen Benutzer wiederzugeben,
einen Befehl zum Anzeigen der Markierungen an dem Strukturmuster, oder in Nachbarschaft zu diesem, auf dem Monitor zusammen mit dem Entwurf des Strukturmusters, und
einen Entwurfsänderungsbefehl (56) zum, wenn ein Benutzer die Markierungen auf dem Monitor unter Verwendung der Eingabeeinrichtung bewegt, Ändern des Entwurfs des Strukturmusters, um den geänderten Entwurf auf dem Monitor anzuzeigen,
wobei die Markierungen wenigstens Positionsmarkierungen (81, 100, 110, 130) für das Strukturmuster und Einzelmustermarkierungen (83 bis 86, 96, 101, 111, 112, 131, 132) in Entsprechung zu einer Vielzahl von einzelnen Mustern des Strukturmusters umfassen, und
der Entwurfsänderungsbefehl (56) die Position des Strukturmusters durch das Bewegen der Positionsmarkierungen (81, 100, 110, 130) bewegt und Entwürfe der Vielzahl von einzelnen Mustern des Strukturmusters durch das Bewegen der Einzelmustermarkierungen (83 bis 86, 96, 101, 111, 112, 131, 132) ändert,
wobei das Strukturmuster wenigstens ein Sammel- bzw. Raffmuster und ein gekreuztes Muster umfasst und wobei die Entwurfsänderungseinrichtung (26) die Einzelmustermarkierungen (111, 112) des Raffmusters bewegt, um dadurch die Breite oder den Abstand von Sammel- bzw. Raffteilen in Übereinstimmung mit der Anzahl von Raffteilen zu ändern, und weiterhin eine Einzelmustermarkierung (83 bis 86, 131, 132) an einem Ende in einer horizontalen Richtung des gekreuzten Musters bewegt, um einen Entwurf des anderen Endes in der horizontalen Richtung des gekreuzten Musters zu ändern, um dadurch eine Symmetrie zu erhalten, und
wobei die Markierungen weiterhin Größenmarkierungen (82, 102) für das Strukturmuster umfassen, und die Entwurfsänderungseinrichtung die Größe des Strukturmusters durch das Bewegen der Größenmarkierungen (82, 102) ändert und die einzelnen Muster wiederholt, um die geänderte Größe zu füllen.

## Revendications

1. Dispositif de conception de tricot pour concevoir un tricot à tricoter par une machine à tricoter, et comprenant un moniteur (6) pour afficher des données de conception pour le tricot et des moyens d'introduction d'informations (10) utilisés par un utilisateur,
le dispositif de conception de tricot comprenant :
des moyens de mémorisation de conception (20, 22) pour mémoriser une conception d'un motif structurel ainsi qu'une marque (81 à 87, 96, 100 à 102, 111, 112, 130 à 132),
des moyens pour mémoriser un programme de tricotage du motif structurel et un paramètre du programme de tricotage pour afficher la marque de façon à représenter le paramètre en réponse au moment où l'utilisateur déplace la marque,
des moyens pour afficher les marques sur le motif structurel ou à son voisinage sur le moniteur, ainsi que la conception du motif structurel ; et
des moyens de modification de conception (26) pour, lorsqu'un utilisateur déplace les marques sur le moniteur en utilisant les moyens d'entrée (10), modifier la conception du motif structurel, pour afficher la conception modifiée sur le moniteur,
et les marques comprenant au moins des marques de position (81, 100, 110, 130) pour le motif structurel et des marques de motifs individuels (83 à 86, 96, 101, 111, 112, 131, 132) correspondant à une pluralité de motifs individuels du motif structurel, et
les moyens de modification de conception (26) déplacent une position du motif structurel en déplaçant les marques de position (81, 100, 110, 130) et modifient les conceptions de la pluralité de motifs individuels du motif structurel en déplaçant les marques de motifs individuels (83 à 86, 96, 101, 111, 112, 131, 132),
dans lequel le motif structurel comprend au moins un motif de rassemblement et un motif croisé, et dans lequel les moyens de modification de conception (26) déplacent les marques de motifs individuels (111, 112) du motif de rassemblement pour modifier ainsi la largeur ou le pas de piècesà rassembler en fonction du nombre de pièces à rassembler, et déplacent en outre une marque de motif individuel (83 à 86, 131, 132), sur une extrémité dans une direction horizontale du motif croisé pour modifier ainsi la conception de l'autre extrémité dans la direction horizontale du motif croisé de façon à obtenir une symétrie, et dans lequel
les marques comprennent en outre des marques de taille (82, 102) pour le motif structurel, et les moyens de modification de conception changent la taille du motif structurel en déplaçant les marques de taille (82, 102), et répètentles motifs individuels de façon à obtenir un remplissage dans la taille modifiée.

2. Dispositif de conception de tricot selon la revendication 1, **caractérisé en ce que** lorsqu'une pluralité des motifs structurels est affichée sur le moniteur, les marques correspondant à seulement un motif structurel sélectionné par l'utilisateur sont affichées sur le moniteur.

3. Procédé de conception de tricot pour concevoir un tricot à tricoter par une machine à tricoter en affichant des données de conception du tricot sur un moniteur et en modifiant la conception en fonction d'informations introduites par un utilisateur, le procédé de conception de tricot comprenant les étapes suivantes :
mémoriser une conception d'un motif structurel ainsi qu'une marque (81 à 87, 96, 100 à 102, 111, 112, 130 à 132), au moyen de moyens de mémorisation de conception (20, 22) ;
des moyens pour mémoriser un programme de tricotage du motif structurel et un paramètre du programme de tricotage pour afficher la marque de façon à représenter le paramètre en réponse au moment où l'utilisateur déplace la marque ;
afficher les marques sur le motif structurel ou à son voisinage, sur le moniteur, ainsi que la conception du motif structurel ; et
lorsqu'un utilisateur déplace les marques sur le moniteur en utilisant un dispositif de pointage, modifier la conception du motif structurel au moyen de moyens de modification de conception (26), pour afficher la conception modifiée sur le moniteur,
les marques comprenant au moins des marques de position (81, 100, 110, 130) pour le motif structurel et des marques de motifs individuels (83 à 86, 96, 101, 111, 112, 131, 132) correspondant à une pluralité de motifs individuels du motif structurel, et
les moyens de modification de conception (26) déplacent une position du motif structurel en déplaçant les marques de position (81, 100, 110, 130) et modifient les conceptions de la pluralité de motifs individuels du motif structurel en déplaçant les marques de motifs individuels (83 à 86, 96, 101, 111, 112, 131, 132),
dans lequel le motif structurel comprend au moins un motif de rassemblement et un motif croisé, et les moyens de modification de conception (26) déplacent les marques de motifs individuels (111, 112) du motif de rassemblement pour modifier ainsi la largeur ou le pas de pièces à rassembler en fonction du nombre de pièces à rassembler, et déplacent en outre une marque de motif individuel (83 à 86, 131, 132) sur une extrémité dans une direction horizontale du motif croisé pour modifier ainsi la conception de l'autre extrémité dans la direction horizontale du motif croisé de façon à obtenir une symétrie, et dans lequel
les marques comprennent en outre des marques de taille (82, 102) pour le motif structurel, et les moyens de modification de conception changent la taille du motif structurel en déplaçant les marques de taille (82, 102), et répètent les motifs individuels de façon à obtenir un remplissage dans la taille modifiée.

4. Programme de conception de tricot pour un dispositif de conception de tricot (2) pour concevoir un tricot à tricoter par une machine à tricoter et comprenant un moniteur pour afficher des données de conception du tricot et des moyens d'introduction d'informations, le programme de conception de tricot comprenant :
une commande (53, 54) pour mémoriser une conception d'un motif structurel avec une marque (81 à 87, 96, 100 à 102, 111, 112, 130 à 132), des moyens pour mémoriser un programme de tricotage du motif structurel et un paramètre du programme de tricotage pour afficher la marque de façon à représenter le paramètre en réponse au moment où l'utilisateur déplace la marque,
une commande pour afficher les marques sur le motif structurel ou à son voisinage sur le moniteur, ainsi que la conception du motif structurel ; et une commande de modification de conception (56) pour, lorsqu'un utilisateur déplace les marques sur le moniteur en utilisant un dispositif de pointage, modifier la conception du motif structurel pour afficher la conception modifiée sur le moniteur,
les marques comprenant au moins des marques de position (81, 100, 110, 130) pour le motif structurel et des marques de motifs individuels (83 à 86, 96, 101, 111, 112, 131, 132) correspondant à une pluralité de motifs individuels du motif structurel, et
la commande de modification de conception (56) déplaçant la position du motif structurel en déplaçant les marques de position (81, 100, 110, 130) et modifiant les conceptions de la pluralité de motifs individuels du motif structurel en déplaçant les marques de motifs individuels (83 à 86, 96, 101, 111, 112, 131, 132),
dans lequel le motif structurel comprend au moins un motif de rassemblement et un motif croisé, et les moyens de modification de conception (26) déplacent les marques de motifs individuels (111, 112) du motif de rassemblement pour modifier ainsi la largeur ou le pas de pièces à rassembler en fonction du nombre de pièces à rassembler, et déplacent en outre une marque de motif individuel (83 à 86, 131, 132) sur une extrémité dans une direction horizontale du motif croisé pour modifier ainsi la conception de l'autre extrémité dans la direction horizontale du motif croisé de façon à obtenir une symétrie, et dans lequel
les marques comprennent en outre des marques de taille (82, 102) pour le motif structurel, et les moyens de modification de conception changent la taille du motif structurel en déplaçant les marques de taille (82, 102), et répètent les motifs individuels de façon à obtenir un remplissage dans la taille modifiée.
